(19) Europäisches Patentamt
European Patent Office
Office européen des brevets

(11) **EP 3 179 446 A1**

(12) **EUROPEAN PATENT APPLICATION**
published in accordance with Art. 153(4) EPC

(43) Date of publication:
**14.06.2017 Bulletin 2017/24**

(51) Int Cl.:
***G06T 7/60*** *(2017.01)*

(21) Application number: **15828976.9**

(86) International application number:
**PCT/JP2015/003803**

(22) Date of filing: **29.07.2015**

(87) International publication number:
**WO 2016/021152 (11.02.2016 Gazette 2016/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **06.08.2014 JP 2014160366**

(71) Applicant: **Panasonic Corporation
Kadoma-shi, Osaka 571-8501 (JP)**

(72) Inventors:
• **KAWAGUCHI, Kyoko
Osaka 540-6207 (JP)**
• **SEKII, Taiki
Osaka 540-6207 (JP)**

(74) Representative: **Eisenführ Speiser
Patentanwälte Rechtsanwälte PartGmbB
Postfach 10 60 78
28060 Bremen (DE)**

(54) **ORIENTATION ESTIMATION METHOD, AND ORIENTATION ESTIMATION DEVICE**

(57)    An orientation estimation device includes a processor. The processor receives the analysis target image and sets a plurality of reference positions including a head position and a waist position of a person with respect to an input analysis target image. A candidate region of a part region in an analysis target image is determined based on a joint base link model in which an orientation of a person is defined by an arrangement of a plurality of point positions including the head position and the waist position and a plurality of the part regions and the plurality of set reference positions. It is determined whether the person included in the analysis target image takes the orientation or not based on a part image feature which is an image feature of a part region in an image obtained by photographing a person and an image feature of the determined candidate region.

## FIG. 1

**Description**

## TECHNICAL FIELD

The present disclosure relates to an orientation estimation method and an orientation estimation device that estimate an orientation of a person included in an image from the image.

## BACKGROUND ART

Conventionally, there is a technology that estimates an orientation of a person included in an image (hereinafter, referred to as a "subject") from the image (see, for example, NPL 1).

The technology described in NPL 1 (hereinafter, referred to as a "related art"), first, extracts a contour shape of a head from an image to estimate a head position and applies a backbone link model which defines an orientation of a person to the image using the estimated head position as a reference. Here, the backbone link model in the related art is a model which defines an orientation of a person by a position, a width, a height, and an angle of each of five parts of a head, an upper body, a lower body, an upper thigh, and a lower thigh.

In the related art, multiple particles each representing a plurality of orientations are set and likelihood representing certainty that each part of each particle exists in a set region is calculated from an image feature of each part. In the related art, the orientation of which a weighted average value of likelihoods of all parts is the highest is estimated as an orientation that a subject takes.

Citation List

Non Patent Literature

NPL 1: Kiyoshi HASHIMOTO, et al. "Robust Human Tracking using Statistical Human Shape Model of Appearance Variation", VIEW2011, 2011, pp. 60-67

NPL 2: j. Deutscher, et al. "articulated body motion capture by annealed particle filtering" in cvpr, 2, 2000, pp.126-133

NPL 3: d. Biderman, "11 minutes of action", the wall street journal, 2010/1/15

## SUMMARY OF THE INVENTION

However, in the related art, although it is possible to estimate an ordinary orientation such as erecting upright, inclining of the top half of the body, crouching, or the like with high accuracy, it is difficult to estimate an extraordinary orientation such as kicking up of legs, sitting position in an open leg orientation, or the like with high accuracy. This is because in the backbone link model described above, it is unable to discriminate whether a difference in a balance between distances of respective parts or a size of each part is caused by a difference in a direction or distance of each part with respect to a photographing viewpoint or expansion of a region of a part due to opening of legs or the like.

In recent years, a development of an athlete behavior analysis system (ABAS) that analyzes a motion of a player from a video obtained by photographing a sports game is actively carried out. A sports player takes a wide variety of orientations including the extraordinary orientation described above. Accordingly, a technology capable of estimating the orientation of a person included in an image with higher accuracy is required.

An object of the present disclosure is to provide an orientation estimation method and an orientation estimation device that can estimate an orientation of a person included in an image with higher accuracy.

According to the present disclosure, there is provided an orientation estimation method in which a processor estimates an orientation of a person within an analysis target image. The processor receives an analysis target image and sets a plurality of reference positions including a head position and a waist position of a person with respect to an input analysis target image. A candidate region of a part region is determined in an analysis target image based on a joint base link model in which the orientation of a person is defined by an arrangement of a plurality of point positions including the head position and the waist position and a plurality of the part regions and the plurality of set reference positions. It is determined whether a person included in the analysis target image takes the orientation or not based on a part image feature which is an image feature of the part region in an image obtained by photographing a person and an image feature of the determined candidate region.

According to the present disclosure, there is provided an orientation estimation device which includes a processor. The processor receives an analysis target image and sets a plurality of reference positions including a head position and a waist position of a person with respect to an input analysis target image. A candidate region of a part region is determined in the analysis target image based on the joint base link model in which the orientation of a person is defined by an arrangement of a plurality of point positions including the head position and the waist position and a plurality of the part regions and the plurality of set reference positions. It is determined whether a person included in an analysis target image takes the orientation or not based on a part image feature which is an image feature of the part region in an image obtained by photographing a person and an image feature of the determined candidate region.

According to the present disclosure, it is possible to estimate the orientation of a person included in an image with higher accuracy.

## BRIEF DESCRIPTION OF DRAWINGS

Fig. 1 is a block diagram illustrating an example of a configuration of an orientation estimation device according to the present embodiment.

Fig. 2 is a diagram for explaining an example of a joint base link model in the present embodiment.

Fig. 3 is a diagram for explaining an example of a state of learning of a part image feature in the present embodiment.

Fig. 4 is a diagram illustrating an example of operations of the orientation estimation device according to the present embodiment.

Fig. 5 is a diagram illustrating an example of an input video in the present embodiment.

Fig. 6 is a diagram illustrating an example of a state of a reference position setting in the present embodiment.

Fig. 7 is a diagram illustrating an example of a particle group generated in the present embodiment.

Fig. 8 is a diagram illustrating an example of a particle group generated from only a single reference position for reference.

Fig. 9 is a diagram illustrating an example of a candidate orientation estimated from an initial particle in the present embodiment.

Fig. 10 is a diagram illustrating an example of a candidate orientation estimated from an additional particle in the present embodiment.

Fig. 11 is a diagram illustrating an example of an experiment result in the present embodiment.

## DESCRIPTION OF EMBODIMENTS

Hereinafter, an embodiment of the present disclosure will be described in detail with reference to the drawings.

<Configuration of Orientation Estimation Device>

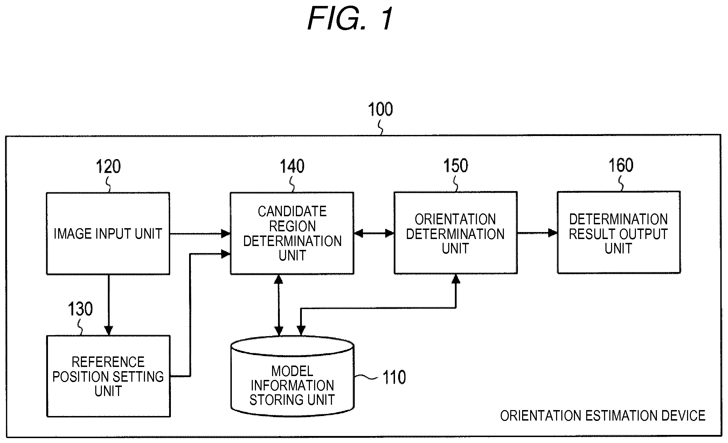

Fig. 1 is a block diagram illustrating an example of a configuration of an orientation estimation device according to the present embodiment.

Although not illustrated, orientation estimation device 100 illustrated in Fig. 1 includes, for example, a central processing unit (CPU), a storage medium such as a read only memory (ROM) that stores a control program, and a work memory such as a random access memory (RAM) as a processor. In this case, functions of respective units described above are implemented by causing the CPU to execute the control program. Orientation estimation device 100 includes, for example, a communication circuit and performs inputting and outputting of data with other devices by communication using the communication circuit. Orientation estimation device 100 includes, for example, a user interface such as a liquid crystal display with a touch panel and performs displaying of information or receiving of operation using the user interface.

In Fig. 1, orientation estimation device 100 includes model information storing unit 110, image input unit 120, reference position setting unit 130, candidate region determination unit 140, orientation determination unit 150, and determination result output unit 160.

Model information storing unit 110 stores a joint base link model which is a kind of a human body model and a part image feature which is an image feature of each part of a human body in advance.

A human body model is a constraint condition for an arrangement or a size of respective parts of a person in an image and is information indicating an orientation of a person (feature of a human body). The joint base link model used in the present embodiment is a human body model suitable for estimating an extraordinary orientation such as an orientation in sports with high accuracy and is defined using orientation state space having a plurality of state variables as axes. More specifically, the joint base link model is a human body model in which an orientation of a person is defined by an arrangement of a plurality of point positions including the head position and the waist position and a plurality of part regions. Details of the joint base link model will be described later.

The part image feature is an image feature of a region of body parts (hereinafter, referred to as a "part region") such as a body part and an upper left thigh part in the image obtained by photographing a person. Details of the part image feature will be described later.

Image input unit 120 receives a video which becomes a target for extraction of a person or estimation of an orientation of a person. Image input unit 120 sequentially outputs a plurality of image frames (hereinafter, referred to as an "analysis target image") in time series which constitute a video to reference position setting unit 130 and candidate region determination unit 140. Image input unit 120 accesses, for example, a server on the Internet and acquires a video stored in the server. The analysis target image is, for example, a wide area still image obtained by photographing the entire field of the American football. In the analysis target image, the X-Y coordinate system which uses, for example, a position of the lower left corner of the image as a reference is set.

Reference position setting unit 130 sets a plurality of reference positions including the head position and the waist position of a person (hereinafter, referred to as a "subject") included in the analysis target image with respect to the input analysis target image. In the present embodiment, the reference positions are assumed as two positions of the head position and the waist position. Reference position setting unit 130 outputs reference position information indicating a reference position which is set to candidate region determination unit 140.

More specifically, reference position setting unit 130 displays, for example, an analysis target image of a head frame of a video and sets the reference position based on the user's operation. Details of setting of the reference position will be described later.

Candidate region determination unit 140 determines a candidate region of the part region in the input analysis target image based on the joint base link model stored in model information storing unit 110 and a plurality of reference positions indicated by input reference position information.

More specifically, candidate region determination unit 140 generates, for example, samples (arrangement of a plurality of point positions and a plurality of part regions) of a plurality of orientations based on the joint base link model, regarding an analysis target image of a head frame of a video. Candidate region determination unit 140 determines, regarding each of the plurality of generated samples, an arrangement (hereinafter, referred to as a "mapped sample") in the analysis target image of a plurality of part regions and a plurality of point positions by matching the sample with the analysis target image using the reference position as a reference.

On the other hand, candidate region determination unit 140, for example, regarding subsequent frames, generates sample in a shape in which multiple candidate regions are arranged in the vicinity of the periphery for each part based on the position and the orientation of the subject in an immediately preceding frame and determines a mapped sample.

Candidate region determination unit 140 outputs mapped sample information (that is, which indicates determined candidate region) indicating the mapped sample and the input analysis target image to orientation determination unit 150. Details of determination of the candidate region (mapped sample) will be described later.

Orientation determination unit 150 determines whether a person included in the input analysis target image takes any of orientations corresponding to mapped samples based on the part image feature of each part stored in model information storing unit 110 and an image feature of each candidate region indicated by the input mapped sample information. That is, orientation determination unit 150 determines whether the person who takes an orientation of the mapped sample indicated by the mapped sample information is included in the analysis target image.

More specifically, orientation determination unit 150 calculates likelihood per part representing certainty that a candidate region is the corresponding part region regarding each of a plurality of candidate regions included in a plurality of mapped samples. Orientation determination unit 150, regarding each of the plurality of mapped samples, calculates the entire likelihood representing certainty that the person who takes an orientation of the mapped sample is included in the analysis target image based on some or all of the plurality of calculated likelihoods per part. Orientation determination unit 150 determines that an orientation of the mapped sample of which the entire likelihood is the highest is the orientation that the person included in the analysis target image takes.

That is, the mapped sample corresponds to a particle in particle filtering and orientation determination processing implemented by candidate region determination unit 140 and orientation determination unit 150 corresponds to the particle filtering processing.

The particle filtering is a method for sampling inside of state space intended to be estimated by multiple particles generated according to a system model, performing likelihood computation in each particle, and estimating the state by weighted averaging of likelihoods. Details of the particle filtering processing are described in, for example, NPL 2, and thus description thereof will be omitted here.

Orientation determination unit 150 outputs orientation estimation information indicating an orientation determined that the person included in the analysis target image takes and the input analysis target image to determination result output unit 160. Orientation determination unit 150 feedbacks mapped sample information indicating a mapped sample of which the entire likelihood is the highest to candidate region determination unit 140 as information indicating the position and the orientation of the subject in the immediately preceding frame. Details of the orientation estimation will be described later.

Candidate region determination unit 140 and orientation determination unit 150 perform generation of a particle and calculation of likelihood using a low-dimensional orientation state space obtained by reducing dimensions of the orientation state space. Details of dimension reduction of the orientation state space and details of generation of a particle using the low-dimensional orientation state space will be described later.

Candidate region determination unit 140 and orientation determination unit 150 repeat processing for state space sampling, likelihood computation, and state estimation to efficiently perform state space search and state estimation. Details of repetition of the orientation estimation will be described later.

Determination result output unit 160 outputs input orientation estimation information. The outputting includes displaying of orientation estimation information, recording of the orientation estimation information into a recording medium, transmitting of the orientation estimation information to another device, or the like. In a case where orientation estimation information is information indicating a mapped sample of an estimated orientation, determination result output unit 160, for example, generates an image indicating the mapped sample and superposes the image on the analysis target image to be displayed.

Orientation estimation device 100 having such a configuration generates a particle using the orientation state space which is subjected to dimension reduction of a human body model obtained by being correlated with more various orientations and estimates the arrangement of each part with a likelihood determination based on an image feature. With this, orientation estimation device 100 can estimate an orientation of a person included in an image with higher accuracy and at a higher speed.

<Joint Base Link Model>

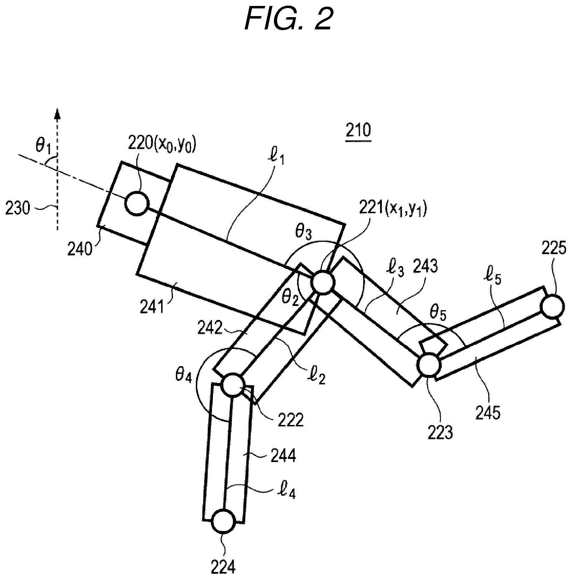

Fig. 2 is a diagram for explaining an example of a joint base link model.

As illustrated in FIG. 2, joint base link model (or a sport backbone link model) 210 is constituted with legs, the body, and the head having no distinction between the right and the left sides and is a two-dimensional skeleton model. Joint base link model 210 includes an arrangement of six point positions of head position 220, waist position (waist joint position) 221, left knee position 222, right knee position 223, left ankle position 224, and right ankle position 225 of a person in the image obtained by photographing the person. The right and the left sides here are not limited to the right and the left sides of a person and indicate the right and the left sides used for distinction in Fig. 2 for the sake of convenience.

In the following description, a coordinate value of head position 220 in the X-Y coordinate system is represented as $(x_0,y_0)$. A coordinate value of waist position 221 in the X-Y coordinate system is represented as $(x_1,y_1)$.

Line segment $l_1$ connects head position 220 and waist position 221, line segment $l_2$ connects waist position 221 and left knee position 222. Line segment $l_3$ connects waist position 221 and right knee position 223, line segment $l_4$ connects left knee position 222 and left ankle position 224. Line segment $l_5$ connects right knee position 223 and right ankle position 225. A length of line segment $l_1$ is represented as symbol s. Lengths of line segments $l_2$ to $l_5$ are given by ratios of $l_2$ to $l_5$ to s. That is, there are two types of symbols $l_2$ to $l_5$ for a case of being used as names of the parts and a case of being used as lengths of the parts.

Line segments $l_1$ to $l_5$ correspond to an axis of the head and body, an axis of the upper left thigh, an axis of the upper right thigh, an axis of the lower left thigh, and an axis of the lower right thigh in order.

An angle (upper half body absolute angle) of line segment $l_1$ with respect to reference direction 230 such as the vertical direction is represented as symbol $\theta_1$. Angles (leg relative angle, relative angle around waist joint) of line segments $l_2$ and $l_3$ with respect to line segment $l_1$ are represented as symbols $\theta_2$ and $\theta_3$ in order. An angle (leg relative angle, relative angle around left knee joint) of line segment $l_4$ with respect to line segment $l_2$ is represented as symbol $\theta_4$. An angle (leg relative angle, relative angle around right knee joint) of line segment $l_5$ with respect to line segment $l_3$ is represented as symbol $\theta_5$.

That is, angles $\theta_1$ to $\theta_5$ correspond to an inclination of the head and body, an inclination of the upper right thigh, an inclination of the lower right thigh, an inclination of the upper left thigh, and an inclination of the lower left thigh in order.

Joint base link model 210 consists of fourteen-dimensional state variables (parameters) such as two sets of coordinate values $(x_0,y_0)$ and $(x_1,y_1)$, one distance s, four distance ratios $l_2$ to $l_5$, and five angles $\theta_1$ to $\theta_5$. That is, a value of each state variable of joint base link model 210 can be changed to define a plurality of orientations. A range and a pitch width of change (hereinafter, referred to as a "sample condition") in the value of each state variable is determined for each state variable in advance and constitutes joint base link model 210.

Coordinate value $(x_0,y_0)$ of head position 220 is uniquely determined by coordinate value $(x_1,y_1)$ of waist position 221, distance s, and angle $\theta_1$. Accordingly, coordinate value $(x_0,y_0)$ of head position 220 can be omitted. In the following description, coordinate value $(x_1,y_1)$ of waist position 221 is represented as symbol u and coordinate value $(x_0,y_0)$ of head position 220 is represented as symbol u'.

Joint base link model 210 defines head region 240, body region 241, upper left thigh region 242, upper right thigh region 243, lower left thigh region 244, and lower right thigh region 245 (hereinafter, referred to as a "part region") of a person as a relative region to positions 221 to 225. Accordingly, it is possible to change the value of each state variable of joint base link model 210 to define a relative position of each part in each of the plurality of orientations. It is possible to apply joint base link model 210 to an image to thereby define a region occupied by each part in the image in each of the plurality of orientations.

<Part Image Feature>

The joint base link model and the part image feature of each part are determined in advance based on a plurality of images for learning (template images) obtained by photographing a person and are stored in model information storing unit 110. The joint base link model and the part image feature, hereinafter, are collectively referred suitably to as "model information".

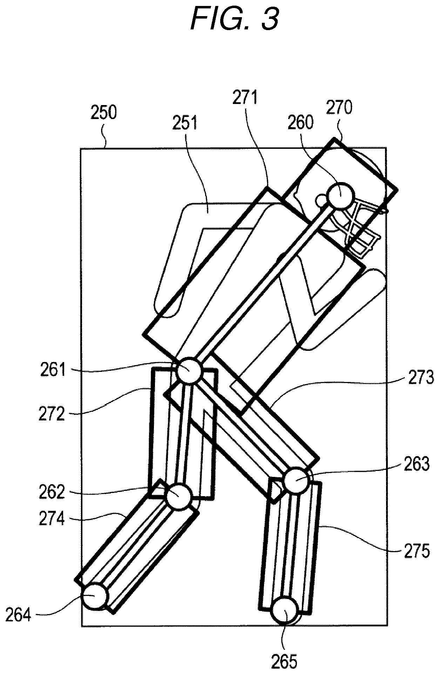

Fig. 3 is a diagram for explaining an example of a state of learning of a part image feature.

As illustrated in FIG. 3, for example, a model information generation device (not illustrated and may be orientation estimation device 100) that generates model information displays image for learning 250 including subject 251. An operator designates a plurality of point positions including head position 260, waist position 261, left knee position 262, right knee position 263, left ankle position 264, and right ankle position 265 with respect to image for learning 250 using a pointing device while confirming displayed image for learning 250.

These positions 260 to 265, that is, correspond to positions 220 to 225 of joint base link model 210 (see Fig. 2). Designation of positions 260 to 265 with respect to image for learning 250 is designation of positions 220 to 225 of joint base link model 210 and corresponds to designation of state variables of joint base link model 210.

The operator designates head region 270, body region 271, upper left thigh region 272, upper right thigh region 273, lower left thigh region 274, and lower right thigh region 275 by a rectangle generated through a diagonal line operation or the like with respect to image for learning 250. Each region is designated, thereby a lateral width of each region is determined. A method for designating each region is not limited to a method for designation by a rectangle. For example, each region may be automatically designated based on ratios which are determined with respect to a length for each region. That is, regions 270 to 275 may be set based on a relative position (region range) determined in advance with respect to positions 220 to 225.

The model information generation device extracts (samples) an image feature such as a color histogram, the number of foreground pixels (for example, the number of pixels of a color other than green which is a color of a field), or the like from each of regions 270 to 275 which are set. The model information generation device records the extracted image feature and a relative position (region range) of a region with respect to a plurality of positions 220 to 225 in correlation with identification information of a corresponding part.

The model information generation device performs relevant processing on a plurality of images for learning and accumulates a plurality of image features (and relative positions) for each part. The model information generation device assumes an average value of each part of the accumulated image features (and relative positions) as a part image feature (and relative position) of each part. The image feature (and relative position) of each part is stored in model information storing unit 110.

It is preferable that the plurality of images for learning are multiple images subjected to photographing regarding various scenes, timings, and subjects. In a case where it is determined in advance that a person who becomes a target for orientation estimation is a player wearing a uniform, it is preferable that learning of the part image feature is performed from an image for learning obtained by photographing the person who wears the uniform.

<Dimension Reduction of Orientation State Space>

State variable vector (orientation parameter) x of joint base link model 210 (see Fig. 2) is represented by, for example, the following Equation (1).

$$\mathbf{x} = (\mathbf{u}, s, \mathbf{l}, \boldsymbol{\theta}), \quad \mathbf{l} = (l_2, l_3, l_4, l_5), \quad \boldsymbol{\theta} = (\theta_1, \theta_2, \theta_3, \theta_4, \theta_5)$$

$$\cdots (1)$$

The main component analysis is performed on state variable vector x to perform the dimension reduction to thereby obtain state variable vector x' defined by, for example, the following Equation (2).

$$\mathbf{x}' = (\mathbf{u}, s, p_1, p_2, p_3, p_4, p_5) \quad \cdots (2)$$

Here, symbol $p_j$ is a coefficient of j-th main component vector $P_j$ obtained by main component analysis (PCA) with respect to learning data for learning of lengths $l_2$ to $l_5$ and angles $\theta_1$ to $\theta_5$ obtained from a plurality of (for example, 300) images for learning. Here, the top five main component vectors in a contribution rate are used as a base vector of the orientation state space. The main component vector $P_j$ is a vector where deviations of lengths $l_2$ to $l_5$ and angles $\theta_1$ to $\theta_5$ are arranged and is represented by, for example, the following Equation (3).

$$\mathbf{P}_j = \left( l_2^j, l_3^j, l_4^j, l_5^j, \theta_1^j, \theta_2^j, \theta_3^j, \theta_4^j, \theta_5^j \right) \quad \cdots (3)$$

State variable vector x has twelve dimensions and state variable vector x' has eight dimensions. As such, it is possible to estimate the orientation at a higher speed by performing solution search in a low-dimensional orientation state space stretched in each dimension of state variable vector x' subjected to dimension reduction.

For example, in a case where a coordinate value u~ of a waist position (reference position) is given in an analysis target image, it is possible to set u = u~ regarding the generated sample to uniquely generate a particle (candidate region) of each part. However, the number of arranged patterns of other parts with respect to the waist position is huge.

In contrast, in a case where coordinate value u~' of the head position (reference position) is given in the analysis target image as well as coordinate value u~ of the waist position, when u = u~ and s = |u~ - u~'| are set for each sample, angle $\theta_1$ corresponds to angle $\theta$~$_1$ of a straight line passing through the waist position of coordinate value u~ and the head position of coordinate value u~'. Relevant angle $\theta$~$_1$ is, for example, satisfies the following Equation (4).

$$\widetilde{\theta}_1 = \sum_{j \in Q} p_j \theta_1^j + \overline{\theta}_1 \quad \cdots (4)$$

Here, symbol $\theta$~$_1$ represents an average value of angles $\theta_1$ in the learning data. Symbol Q is a set of j satisfying $\theta_1^j \neq 0$. In a case where $|Q| \geq 2$, a solution of coefficient $p_j$ satisfying $j \in Q$ in Equation (4) is infinitely present. For that reason, it is difficult to uniquely determine the coefficient $p_j$ ($j \in Q$) of each particle.

Since the number of unknown parameters is greater than the number of equations of constraint conditions obtained from two reference positions, in a case where dimensions of the orientation state space is just reduced for speeding up of the orientation estimation, it is difficult to uniquely generate the particle. Thus, orientation estimation device 100 calculates a hyperplane (arbitrary-dimensional plane) in which a solution is present in a reverse order from two reference positions in the low-dimensional orientation state space subjected to dimension reduction by the main component analysis and uniquely generates the particle on the hyperplane.

<Generation of Particle>

Candidate region determination unit 140 sets an initial particle in a low-dimensional orientation state section. Here, the initial particle is a candidate region of each part regarding a plurality of orientations determined in advance in order to approximately estimate an orientation. Candidate region determination unit 140 maps the initial particle which is set for each orientation onto the hyperplane calculated in a reverse order from the two reference positions.

The hyperplane is represented from, for example, the following Equation (5).

$$\sum_{j \in Q} p_j \theta_1^j = c, \quad c = \widetilde{\theta}_1 - \overline{\theta}_1 \quad \cdots (5)$$

Here, symbol c is a constant and a first expression of Equation (5) represents a hyperplane in a $|Q|$-dimensional space. Candidate region determination unit 140 obtains coefficient $p_j$ satisfying Equation (5) from coefficient p^$_j$ of the main component vector satisfying $j \in Q$ of a sample to be mapped. Candidate region determination unit 140 replaces coefficient p^$_j$ with calculated $p_j$ to thereby implement mapping of the sample into the hyperplane.

When an absolute angle around the waist joint of line segment $l_1$ is replaced with symbol $\theta$^$_1$ in the sample to be mapped, the following Equation (6) is established similar to Equations (4) and (5).

$$\sum_{j\in Q} \hat{p}_j \theta_1^j = \hat{c}, \quad \hat{c} = \hat{\theta}_1 - \overline{\theta}_1 \qquad \cdots (6)$$

When both sides of a first expression of Equation (6) is divided by c^ and multiplied by c, the following Equation (7) is obtained.

$$\sum_{j\in Q} \frac{c\hat{p}_j}{\hat{c}} \theta_1^j = c \qquad \cdots (7)$$

Accordingly, from Equation (7), coefficient $p_j$ satisfying the first expression of Equation (5) is represented by the following Equation (8).

$$p_j = \frac{c\hat{p}_j}{\hat{c}} \qquad \cdots (8)$$

In Equation (8), coefficient $p_j$ becomes an unstable value as a value of c^ of the denominator of the right side becomes close to 0. In this case, candidate region determination unit 140 excludes the corresponding sample from searching targets. Candidate region determination unit 140 computes coefficient $p_j$ from Equation (8) after Gaussian noise is added to coordinate values u~ and u~' for each sample. That is, candidate region determination unit 140 allows change (error) of two reference positions according to a Gaussian distribution in the particle. With this, convergence to the local solution may also be avoided to achieve reaching a global optimum solution more surely.

<Operation of Orientation Estimation Device>

Operations of orientation estimation device 100 will be described.

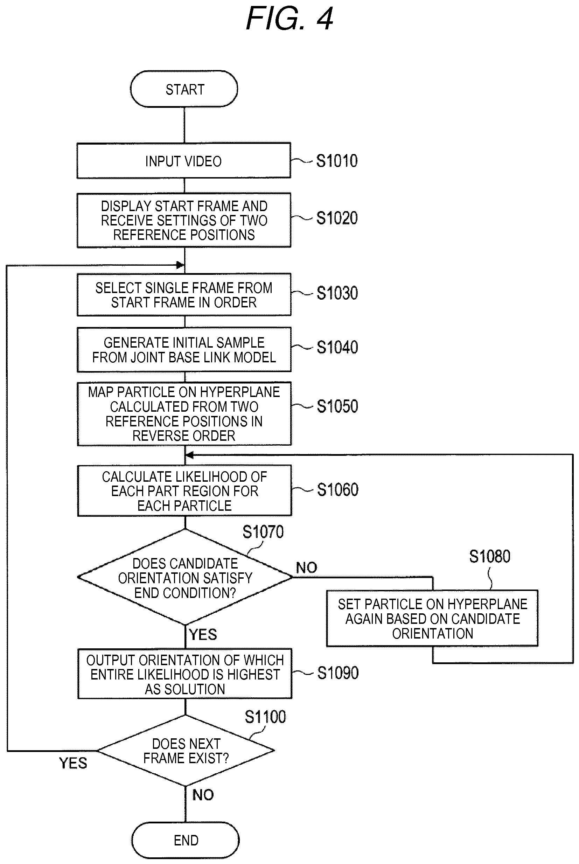

Fig. 4 is a diagram illustrating an example of operations of orientation estimation device 100.
In Step S1010, image input unit 120 starts receiving of a video.

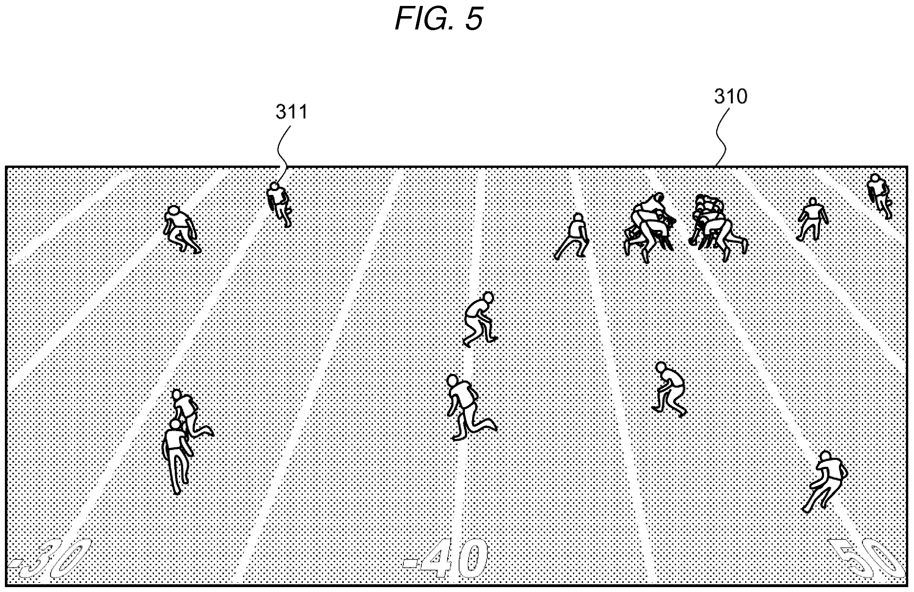

Fig. 5 is a diagram illustrating an example of an input video.
As illustrated in FIG. 5, for example, a panoramic image 310 of a field of the American football is input into image input unit 120. A plurality of players 311 are included in panoramic image 310.
In Step S1020 of Fig. 4, the reference position setting unit 130 displays an image of a start frame of an input video (analysis target image) and receives settings of the head position and the waist position which are two reference positions from a user.

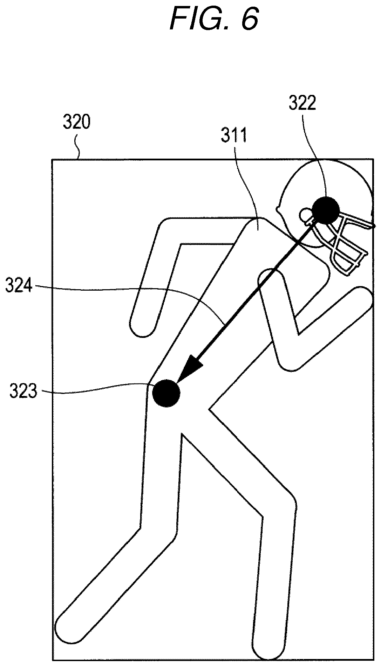

Fig. 6 is a diagram illustrating an example of an appearance in which two reference positions are set by a drag-and-drop operation.
Analysis target image 320 illustrated in Fig. 6 is an enlargement of a portion of, for example, panoramic image 310 (see Fig. 5). The user confirms head position 322 and waist position 323 of player 311 included in displayed analysis target image 320 and performs drag-and-drop (D&D) operation on analysis target image 320 as indicated by arrow 324. That is, the user starts a pushing-down state in a state where head position 322 is designated, moves a designated position to waist position 323 while maintaining the pushing-down state, and releases the pushing-down state in waist position 323.
It is possible to simply perform setting of two reference positions by the drag-and-drop operation. The user performs the drag-and-drop operation on all of the targets for the orientation estimation, that is, each of players 311 of panoramic image 310 in order. Reference position setting unit 130 acquires two reference positions (position 322 and waist position 323) of each player 311 who is set for each player 311. As a method of setting two reference positions, various other methods, for example, a method of just clicking two points, a method of sliding two points on a touch panel, a method of simultaneously touching two points on a touch panel, and a method of designating two points with gestures may be adopted.
In Step S1030, candidate region determination unit 140 selects a single frame of frames of a video from a start frame in order.
In Step S1040, candidate region determination unit 140 changes the state variables at random based on joint base link model to generate a plurality of samples. Hereinafter, a sample generated at first regarding a certain frame is appropriately referred to as an "initial sample". Each part region of the initial sample is appropriately referred to as an "initial particle".

In Step S1050, candidate region determination unit 140 maps a particle of the initial sample on the hyperplane calculated from the two reference positions (head position and waist position) which are set in a reverse order.

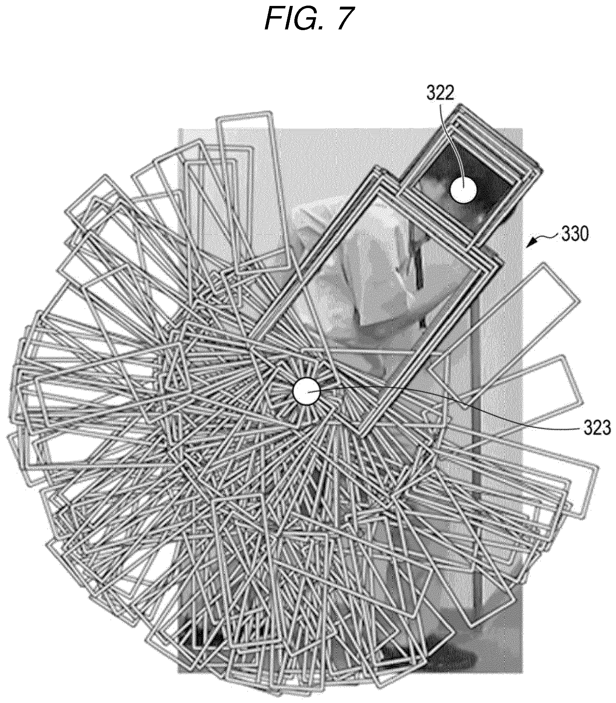

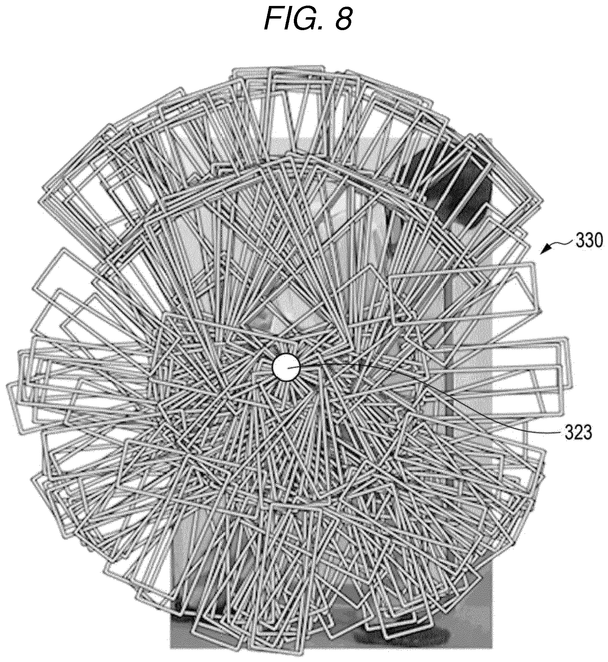

Fig. 7 is a diagram illustrating an example of a particle group in a case where head position 322 and waist position 323 are set. Fig. 8 is a diagram illustrating an example of a particle group in a case where only waist position 323 is set, for reference.

As illustrated in FIG. 7, in a case where head position 322 and waist position 323 are set, regarding particle 330 of the head and body, the position and direction thereof are restricted. Accordingly, as a whole, the number of particles 330 is also reduced and a processing load is reduced.

On the other hand, as illustrated in FIG. 8, in a case where only waist position 323 is set, restrictions on the direction of body and restrictions on the position and direction of the head are few. For that reason, compared to Fig. 7, as a whole, the number of particles 330 is increased.

In Step S1060 of Fig. 4, orientation determination unit 150 calculates likelihood as each part region for each particle. More specifically, orientation determination unit 150 acquires a candidate region which is a peripheral image of a position of each part represented by the sample. Orientation determination unit 150 compares the part image feature and the image feature of the acquired candidate region and regards similarity of image features as likelihood per part of the acquired candidate region. Orientation determination unit 150 adds up likelihoods per part of all parts for each sample and calculates the entire likelihood. Orientation determination unit 150 determines a sample of which the entire likelihood is the highest as a candidate orientation.

In Step S1070, orientation determination unit 150 determines whether the candidate orientation satisfies a predetermined end condition or not. Here, the predetermined condition is a condition corresponding to matters that accuracy as an orientation estimation result of the candidate orientation is a predetermined level or more or matters that the accuracy reaches a limit.

In a case where the candidate orientation does not satisfy the end condition (S1070: NO), orientation determination unit 150 causes processing to proceed to Step S1080.

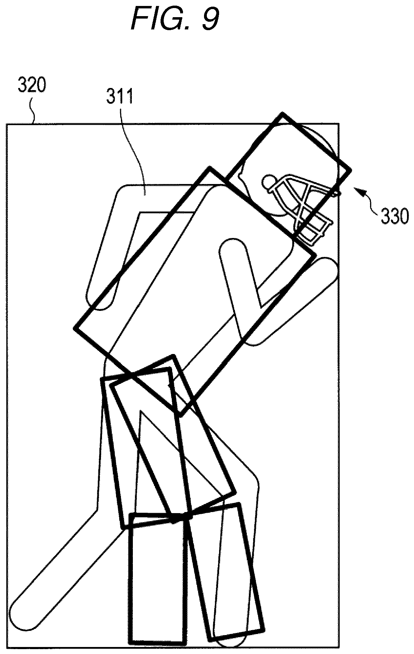

Fig. 9 is a diagram illustrating an example of a candidate orientation estimated from an initial particle.

As illustrated in FIG. 9, the position of each particle 330 of the candidate orientation may be deviated from a position (part region) of each part in a real orientation of player 311 included in analysis target image 320. Here, orientation estimation device 100 determines whether such a deviation occurs or not using the end condition described above. In a case where a deviation occurs, orientation estimation device 100 performs the orientation estimation again based on the candidate orientation.

In Step S1080 of Fig. 4, candidate region determination unit 140 sets the particle on the hyperplane again based on the candidate orientation, and causes processing to return to Step S1060. The particle which is set in Step S1080 is appropriately referred to as an "additional particle".

In Steps S1060 and S1070, orientation determination unit 150 performs a likelihood computation, a candidate orientation determination, and an end condition determination on an additional particle again. Orientation estimation device 100 repeats Steps S1060 to S1080 until a candidate orientation satisfying the end condition is obtained. In a case where the candidate orientation satisfies the end condition (S1070: YES), orientation determination unit 150 causes processing to proceed to Step S1090.

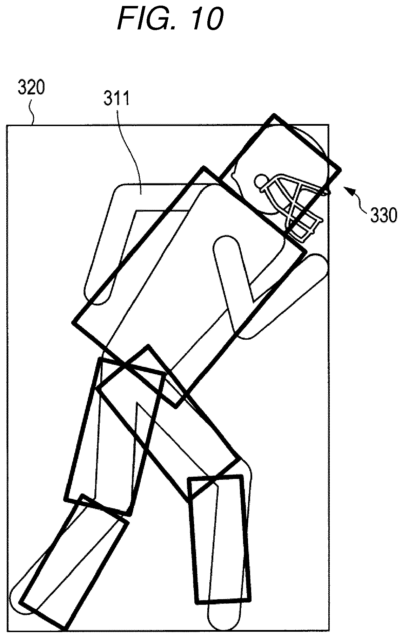

Fig. 10 is a diagram illustrating an example of a candidate orientation estimated from an additional particle.

As illustrated in FIG. 10, the position of each particle 330 of the candidate orientation approaches nearer to the position (part region) of each part in a real orientation of player 311 included in analysis target image 320 by repeating processing of Steps S1060 to S1080 of Fig. 4.

In Step S1090, determination result output unit 160 outputs an orientation of which the entire likelihood is the highest, that is, a candidate orientation determined lastly as a solution of the orientation of a person included in the analysis target image.

In Step S1100, candidate region determination unit 140 determines whether the next frame exists or not.

In a case where the next frame exists (S1100: YES), candidate region determination unit 140 causes processing to return to Step S1030. As a result, orientation estimation device 100 performs processing for estimating an orientation for a new frame based on an orientation estimation result in the immediately preceding frame.

The position and orientation of each subject in subsequent frames after the start frame are estimated stochastically based on the image feature using the position and orientation of the subject in the immediately preceding frame as a reference.

For example, candidate region determination unit 140 applies uniform linear motion model to position space on the image of the person on the assumption that a center of a person moves at a constant. Candidate region determination unit 140 adopts random walk that randomly samples the periphery of the estimated position of each part of the immediately preceding frame with respect to the orientation state space. Such a system model is used so as to make it possible for candidate region determination unit 140 to effectively generate the particle of each subsequent frame.

Accuracy of orientation estimation in the subsequent frames is significantly influenced by accuracy of orientation estimation in the start frame. For that reason, the orientation estimation regarding the start frame, in particular, needs to be performed with high accuracy.

In a case where the next frame does not exist (S1100: NO), candidate region determination unit 140 ends a series of processing.

With such operations, orientation estimation device 100 can perform estimation of an orientation (position) in each time of each person on a video in which multiple persons are included, for example, a video obtained by photographing the American football game. Orientation estimation device 100 can perform the orientation estimation with high accuracy based on a simple operation by the user.

Candidate region determination unit 140 may determine the candidate orientation based on only part regions of some of six part regions, for example, calculating of the entire likelihood based on a total value of likelihood per part of the top four parts with high likelihood per part.

In the sport video, there is a case where the body of a player shields a part of the body of another player. In particular, in the American football, intense contact such as tackling or blocking are frequent and such shielding frequently occurs. It becomes possible to estimate the position or orientation of a shielded player with higher accuracy by determining the candidate orientation based on only some of the part regions and repeating generation of the particle.

Orientation estimation device 100 may perform reverse tracking of a video as well as forward tracking of a video, compare or integrate both tracking results (orientation estimation results), and output the final estimation result. In a case of the reverse tracking, reference position setting unit 130 displays, for example, the last frame of a video and receives settings of a reference position.

<Experiment and Consideration>

Next, description will be made on an experiment that was performed using orientation estimation device 100.

<Experiment 1>

The present inventors conducted experiment assuming that locus data of all players of one American football game are output. The American football game is played with a total of 22 players on two teams and each team is 11 players. In the game, the play is started from a stationary state where both teams face each other and advancing of a ball is stopped by tackling or the like to end the play. An average time of a single play is approximately five seconds and the maximum time of a single play is approximately ten seconds. The American football game is running through collection of such short plays. Although duration of a game is 60 minutes, a time for a strategy meeting or the like is included and thus, a total of actual playtime is approximately 11 minutes (see NPL 3).

A size of an image of a video which becomes an analysis target is 5120 x 720 pixels. A size of a player within the video is approximately 20 x 60 pixels.

In the present experiment, first, a comparison of tracking success rates between the backbone link model described above according to the related art and the joint base link model (sport backbone link) described above according to the present embodiment was performed using a video of an actual one play. In the experiment, a personal computer equipped with a CPU of core i7 was used.

Regarding a video of an actual one play in both the method of the related art and the method of the present embodiment, a result of forward tracking and a result of reverse tracking of all players were output. The number of frames e of the video is e = 190, the number of players d is d = 22, the number of evaluation targets g is g = 4180 (g = d x e).

In the method of the related art, initial position setting of the backbone link model was performed by manually operating a main component or a size and adjusting an area in which a rectangular region of the backbone link model and a silhouette of the player are overlapped with each other to become the largest after clicking a head position of a player to be input. The initial position setting of the joint base link model in the present embodiment was performed by performing a drag-and-drop from the head position to the waist position. The upper body of the joint base link model is automatically set to be matched with the silhouette of the player by such setting.

In the present experiment, whether the superposed head of the tracking result is within the head region of a target player or not was determined by visual observation and a case where the head is within the head region was regarded as tracking success.

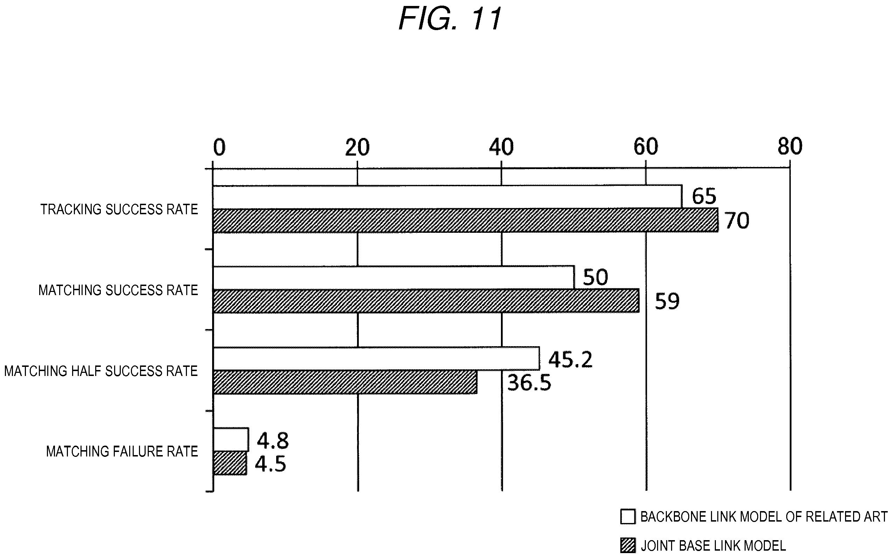

Fig. 11 is a diagram illustrating an example of an experiment result. In Fig. 11, the lateral axis represents a percentage.

In Fig. 11, the "tracking success rate" indicates a frame rate of frames determined as the tracking success in each frame as a result obtained by performing the forward tracking and the reverse tracking on 22 persons of all players in the target video. The "matching success rate" indicates a frame rate of frames that tracking in any of the forward tracking or the reverse tracking was successful. The "matching half success rate" indicates a frame rate of frames that tracking in one of the forward tracking and the reverse tracking was successful. The "matching failure rate" indicates a frame rate of frames that tracking in both of the forward tracking and the reverse tracking was failed.

As illustrated in FIG. 11, it was found out that in the method of the present embodiment that used the joint base link model, the tracking success rate was improved by 5% and the matching success rate was also improved by approximately 9% compared to the method of the related art that used the backbone link model. Also, it was found out that the matching half success rate and matching failure rate of the method were reduced in the present embodiment. As such, by the experiment, it was found out that the orientation was able to be estimated with high accuracy in a state where a load on an operator was reduced in the orientation estimation by the method of the present embodiment.

<Experiment 2>

The inventors quantitatively evaluated an accuracy of the orientation estimation by the orientation estimation method (hereinafter referred to as a "suggested method") of the present embodiment using a wide area still image of the American football. A comparison of an estimation accuracy with the suggested method was performed using a method (hereinafter, referred to as a "1RPM") of semi-automatically estimating an orientation from a single reference point (reference position) as a related method. A difference between the 1RPM and the suggested method is only the particle mapping method and other procedures for the orientation estimation of 1RPM is basically the same as the suggested method.

30 persons were selected from a video of an actual game in a random manner as evaluation target players. Inputting of two reference points (reference positions) used in the orientation estimation was performed by dragging and dropping from a center point of the head to a center point of the waist of a player on the wide area still image by a mouse. As the end condition described above, a condition that setting of an additional particle and the evaluation procedure are repeated ten times was adopted. The number of particle generated simultaneously was set as 2000. Correct/incorrect of orientation estimated for 30 persons of players was determined and the rate of correct answers was calculated and used for evaluation.

A correct/incorrect determination was performed in the following procedure.

(1) A proportion S of an area in which a rectangle of each part overlaps the corresponding part of a target player on an image is visually measured.
(2) An orientation that S of all parts becomes equal to or greater than 1/3 is determined as a correct answer.
(3) Among all parts, an orientation in which one or more rectangles (particles) that S becomes equal to or less than 1/10 exist is determined as an incorrect answer.

The player for which a visual determination of correct/incorrect is difficult in procedures (2) and (3) was excluded from evaluation and a new evaluation target player was added to exclude an ambiguous evaluation result. A threshold value for S in procedures (2) and (3) was obtained by a separate experiment as the minimum value enabling a stable start of an analysis by the athlete behavior analysis system (ABAS).

The particle generated by the suggested method became that as illustrated in Fig. 7 described above and the particle generated by the 1RPM became that as illustrated in Fig. 8 described above. That is, in the suggested method, since a search range in which the particle is mapped onto the hyperplane in the orientation state space was reduced, an area in which a player model was rendered was small compared to the conventional method and a particle which is efficient for search was generated.

The rate of correct answers for 30 players of persons became 82.1% in the suggested method while only 32.1% in the 1PRM. As such, by the experiment, it was found out that the orientation was able to be estimated with higher accuracy in the suggested method compared to the 1RPM.

The positions of the players in each frame were displayed in time series along a video by using both methods in the initial position setting in the athlete behavior analysis system and it was found out that the suggested method was able to more accurately track the position of the player. With this, it was confirmed that the suggested method was valid as an initial orientation setting method in the athlete behavior analysis system and a manual input work of a user was able to be simplified in the athlete behavior analysis system.

<Effect of The Present Embodiment>

As described above, orientation estimation device 100 according to the present embodiment is able to flexibly represent the position or a shape of each part even in a case where the orientation is significantly varied and performs the orientation estimation using the joint base link model which is a human body model corresponding to more various orientation. With this, the orientation estimation device 100 is able to estimate the orientation of a person included in an image with higher accuracy.

Orientation estimation device 100 generates the particle using the orientation state space subjected to dimension reduction and estimates an arrangement of respective parts by a likelihood determination based on the image feature. With this, orientation estimation device 100 is able to estimate the orientation of a person included in an image at a higher speed (with a low processing load).

Orientation estimation device 100 calculates the entire likelihood while calculating the likelihood per part and performs the orientation estimation. With this, the orientation estimation device 100 is able to perform stable orientation estimation even in a case where partial shielding is present in an image of a person.

Orientation estimation device 100 receives settings of two reference positions by a simple operation such as a drag-and-drop and generates the particle on the hyperplane based on the set reference position. With this, orientation estimation device 100 is able to implement high accurate orientation estimation described above with less workload.

Orientation estimation device 100 repeats processing for generating and evaluating the particle until the end condition is satisfied. With this, orientation estimation device 100 is able to estimate the orientation of a person included in an image with higher accuracy.

That is, the orientation estimation device 100 becomes able to perform robust orientation estimation or tracking of a person even in a sport video in which variation in the orientation of a person is significant.

<Modification Example of The Present Embodiment>

The point positions and the part regions used in the joint base link model are not limited to the examples described above. For example, the point positions used in the joint base link model may not include positions of the right and left ankles and may include positions of the right and left elbows or wrists. The part regions, for example, may not include the right and left lower thigh regions and may include the right and left upper arms or forearms.

A portion of a configuration of orientation estimation device 100, for example, may be separated from other portions by being arranged in an external apparatus such as a server in a network. In this case, orientation estimation device 100 needs to include a communication unit for making communication with the external apparatus.

The present disclosure is able to be applied to an image or video obtained by photographing a person such a video of other sports as well as the video of the American football.

<Outline of The Present Disclosure>

The orientation estimation method of the present disclosure includes an image inputting step, a reference position setting step, a candidate region determining step, and an orientation determining step. In the image inputting step, an analysis target image is input. In the reference position setting step, a plurality of reference positions including a head position and a waist position of a person are set with respect to an input analysis target image. In the candidate region determining step, a candidate region of a part region is determined in an analysis target image based on the joint base link model in which the orientation of a person is defined by an arrangement of a plurality of point positions (positions) including the head position and the waist position and a plurality of part regions and a plurality of reference positions which are set. In the orientation determining step, it is determined whether a person included in an analysis target image takes the orientation or not based on a part image feature which is an image feature of the part region in an image obtained by photographing a person and an image feature of the determined candidate region.

The orientation estimation method may include an image display step which displays an analysis target image and an operation receiving step that receives a drag-and-drop operation with respect to the displayed analysis target image. In this case, in the reference position setting step, a start point and an end point of the drag-and-drop operation are respectively set with respect to the analysis target image as the head position and the waist position.

In the designation estimation method, the candidate region determining step may determine a candidate region regarding each of a plurality of part regions. The orientation determining step may also include a likelihood per part calculating step and an entire likelihood evaluating step. In the likelihood per part calculating step, the likelihood per part representing certainty that a candidate region is a corresponding part region is calculated for each of a plurality of candidate regions. In the entire likelihood evaluating step, it is determined whether the person included in the analysis target image takes the orientation or not based on some or all of the plurality of calculated likelihoods per part.

In the orientation estimation method, the joint base link model may include a combination of a plurality of state variables that define an arrangement. In this case, the candidate region determining step includes an initial sample generating step and an initial particle mapping step. In the initial sample generating step, a value of the state variable is changed and a relative positional relationship between a plurality of point positions and a plurality of part regions is determined for each of a plurality of orientations. In the initial particle mapping step, a plurality of candidate regions are determined based on the relative positional relationship determined for each of a plurality of orientations and the plurality of reference positions which are set. The orientation determining step includes an initial orientation estimating step. In the initial orientation estimating step, regarding each of the plurality of orientations, processing of likelihood per part calculating step and the entire likelihood evaluating step regarding a plurality of candidate regions determined in the initial particle mapping step are performed to thereby determine a candidate orientation which is an orientation having a high possibility that a person included in the analysis target image takes from among the plurality of orientations.

In the orientation estimation method, in the initial particle mapping step, the candidate region may be determined using a hyperplane which is restrained by a plurality of reference positions of low-dimensional orientation state space obtained by reducing dimensions of orientation state space, which has a plurality of state variables as axes, by main component analysis.

The orientation estimation method may include an additional candidate region determining step that includes an additional sample generating step and an additional particle mapping step, and an additional orientation estimating step. In the additional sample generating step, the value of the state variable is changed using the candidate orientation determined in the initial orientation estimating step as a reference and the relative positional relationship of the additional candidate orientation approaching the candidate orientation is determined. In the additional particle mapping step, the additional candidate region of each of the plurality of part regions in the analysis target image is determined based on the relative positional relationship of the additional candidate orientation and the plurality of reference positions which are set. In the additional orientation estimating step, the likelihood per part calculating step and the entire likelihood evaluating step are performed on the additional candidate orientation to thereby determine the orientation having the high possibility that the persons included in the analysis target image take.

In the orientation estimation method, the entire likelihood evaluating step in the additional orientation estimating step may include a processing repetition step, an orientation determining step, and a determination result outputting step. In the processing repetition step, it is determined whether the values of a plurality of likelihoods per part satisfy a predetermined end condition or not and in a case where the predetermined end condition is not satisfied, processing of performing the additional candidate region determining step and the additional orientation estimating step using the additional candidate orientation determined immediately before as a reference is repeated. In the orientation determining step, in a case where a predetermined predetermined condition is satisfied, the additional candidate orientation determined lastly is determined as the orientation that the person included in the analysis target image takes. In the determination result outputting step, information indicating the determined orientation is output.

The orientation estimation device of the present disclosure includes a model information storing unit, an image input unit, a reference position setting unit, a candidate region determination unit, and an orientation determination unit. The model information storing unit, stores, for an orientation of a person, a joint base link model defined by an arrangement of a plurality of point positions (positions) including a head position and a waist position and a plurality of part regions in the image obtained by photographing the person and a part image feature which is an image feature of a part region in an image. The image input unit receives an analysis target image. The reference position setting unit sets a plurality of reference positions including the head position and the waist position of the person with respect to the input analysis target image. The candidate region determination unit determines a candidate region of the part region in the analysis target image based on the obtained joint base link model and a plurality of reference positions which are set. The orientation determination unit determines whether the person included in the analysis target image takes the orientation or not based on an image feature of the determined candidate region and the part image feature of an acquired corresponding part region.

## INDUSTRIAL APPLICABILITY

The present disclosure is able to estimate an orientation of a person included in an image with higher accuracy and may be useful as the orientation estimation method and the orientation estimation device.

## REFERENCE MARKS IN THE DRAWINGS

| | |
|---|---|
| 100 | orientation estimation device |
| 110 | model information storing unit |
| 120 | image input unit |
| 130 | reference position setting unit |
| 140 | candidate region determination unit |
| 150 | orientation determination unit |
| 160 | determination result output unit |

| 210 | joint base link model |
|---|---|
| 220, 260, 322 | head position (position) |
| 221, 261, 323 | waist position (position) |
| 222, 262 | left knee position (position) |
| 223, 263 | right knee position (position) |
| 224, 264 | left ankle position (position) |
| 225, 265 | right ankle position (position) |
| 230 | reference direction such as vertical direction |
| 240, 270 | head region (region) |
| 241, 271 | body region (region) |
| 242, 272 | upper left thigh region (region) |
| 243, 273 | upper right thigh region (region) |
| 244, 274 | lower left thigh region (region) |
| 245, 275 | lower right thigh region (region) |
| 250 | image for learning |
| 251 | subject |
| 310 | panoramic image |
| 311 | player |
| 320 | analysis target image |
| 324 | arrow |
| 330 | particle |
| $l_1, l_2, l_3, l_4, l_5$ | line segment |
| $\theta_1, \theta_2, \theta_3, \theta_4, \theta_5$ | angle |

**Claims**

1.  An orientation estimation method comprising:

    causing a processor that estimates an orientation of a person within an analysis target image,
    to receive the analysis target image,
    to set a plurality of reference positions including a head position and a waist position of a person with respect to an input analysis target image,
    to determine a candidate region of a part region in an analysis target image based on a joint base link model in which an orientation of a person is defined by an arrangement of a plurality of point positions including the head position and the waist position and a plurality of the part regions and the plurality of set reference positions, and
    to determine whether the person included in the analysis target image takes the orientation or not based on a part image feature which is an image feature of a part region in an image obtained by photographing a person and an image feature of the determined candidate region.

2.  The orientation estimation method of claim 1, further comprising:

    causing the processor
    to display the analysis target image,
    to receive a drag-and-drop operation with respect to the displayed analysis target image, and
    to respectively set a start point and an end point of the drag-and-drop operation with respect to the analysis target image as the head position and the waist position to set the reference position.

3.  The orientation estimation method of claim 1, further comprising:

    causing the processor
    to determine the candidate region regarding each of the plurality of part regions,
    to calculate likelihood per part representing certainty that the candidate region is a corresponding part region for each of a plurality of the candidate regions, and
    to determine whether the person included in the analysis target image takes the orientation or not based on some or all of a plurality of the calculated likelihoods per part.

**4.** The orientation estimation method of claim 1,
wherein the joint base link model includes a combination of a plurality of state variables that define the arrangement, and
wherein the method further comprises
causing the processor
to change a value of the state variable and determine a relative positional relationship between the plurality of point positions and the plurality of part regions for each of a plurality of the orientations,
to determine the plurality of candidate regions based on the determined relative positional relationship for each of the plurality of orientations and the plurality of set reference positions, and
to determine, for each of the plurality of orientations, a candidate orientation which is an orientation having a high possibility that a person included in the analysis target image takes with respect to the plurality of determined candidate regions.

**5.** The orientation estimation method of claim 4, further comprising:

causing the processor
to determine the candidate region using a hyperplane which is restrained by the plurality of reference positions of low-dimensional orientation state space obtained by reducing dimensions of orientation state space which has the plurality of state variables as axes by a main component analysis.

**6.** The orientation estimation method of claim 4, further comprising:

causing the processor
to change the value of the state variable using the candidate orientation as a reference and determine the relative positional relationship of an additional candidate orientation approaching the candidate orientation,
to determine an additional candidate region of each of the plurality of part regions in the analysis target image based on the relative positional relationship of the additional candidate orientation and the plurality of set reference positions, and
to determine an orientation having a high possibility that the person included in the analysis target image takes with respect to the additional candidate region.

**7.** The orientation estimation method of claim 6, further comprising:

causing the processor
to determine whether the values of the plurality of likelihoods per part satisfy a predetermined end condition,
in a case where the predetermined end condition is not satisfied, to repeat processing of performing determination of the additional candidate region and determination of the additional orientation using the additional candidate orientation determined immediately before as a reference,
in a case where a predetermined predetermined condition is satisfied, to determine the additional candidate orientation determined lastly as the orientation that the person included in the analysis target image takes, and
to output information indicating the determined orientation.

**8.** An orientation estimation device comprising:

a processor,
wherein the processor is configured to
receive the analysis target image,
set a plurality of reference positions including a head position and a waist position of a person with respect to an input analysis target image,
determine a candidate region of a part region in an analysis target image based on a joint base link model in which an orientation of a person is defined by an arrangement of a plurality of point positions including the head position and the waist position and a plurality of the part regions and the plurality of set reference positions, and
determine whether the person included in the analysis target image takes the orientation or not based on a part image feature which is an image feature of a part region in an image obtained by photographing a person and an image feature of the determined candidate region.

**9.** The orientation estimation device of claim 8,
wherein the processor is configured to

display the analysis target image,
receive a drag-and-drop operation with respect to the displayed analysis target image, and
respectively set a start point and an end point of the drag-and-drop operation with respect to the analysis target image as the head position and the waist position to set the reference position.

**10.** The orientation estimation device of to claim 8,
wherein the processor is configured to
determine the candidate region regarding each of the plurality of part regions,
calculate likelihood per part representing certainty that the candidate region is a corresponding part region for each of a plurality of the candidate regions, and
determine whether the person included in the analysis target image takes the orientation or not based on some or all of a plurality of the calculated likelihoods per part.

**11.** The orientation estimation device of claim 8,
wherein the joint base link model includes a combination of a plurality of state variables that define the arrangement, and
wherein the processor is configured to
change a value of the state variable and determine a relative positional relationship between the plurality of point positions and the plurality of part regions for each of a plurality of the orientations,
determine the plurality of candidate regions based on the determined relative positional relationship for each of the plurality of orientations and the plurality of set reference positions, and
determine, for each of the plurality of orientations, a candidate orientation which is an orientation having a high possibility that a person included in the analysis target image takes with respect to the plurality of determined candidate regions.

**12.** The orientation estimation device of claim 11,
wherein the processor is configured to
determine the candidate region using a hyperplane which is restrained by the plurality of reference positions of low-dimensional orientation state space obtained by reducing dimensions of orientation state space which has the plurality of state variables as axes by a main component analysis.

**13.** The orientation estimation device of claim 11,
wherein the processor is configured to
change the value of the state variable using the candidate orientation as a reference and determine the relative positional relationship of an additional candidate orientation approaching the candidate orientation,
determine an additional candidate region of each of the plurality of part regions in the analysis target image based on the relative positional relationship of the additional candidate orientation and the plurality of set reference positions, and
determine an orientation having a high possibility that the person included in the analysis target image takes with respect to the additional candidate region.

**14.** The orientation estimation device of claim 13,
wherein the processor is configured to
determine whether the values of the plurality of likelihoods per part satisfy a predetermined end condition,
in a case where the predetermined end condition is not satisfied, repeat processing of performing determination of the additional candidate region and determination of the additional orientation using the additional candidate orientation determined immediately before as a reference,
in a case where a predetermined predetermined condition is satisfied, determine the additional candidate orientation determined lastly as the orientation that the person included in the analysis target image takes, and
output information indicating the determined orientation.

## FIG. 1

ORIENTATION ESTIMATION DEVICE

100

120 — IMAGE INPUT UNIT

130 — REFERENCE POSITION SETTING UNIT

140 — CANDIDATE REGION DETERMINATION UNIT

150 — ORIENTATION DETERMINATION UNIT

160 — DETERMINATION RESULT OUTPUT UNIT

110 — MODEL INFORMATION STORING UNIT

# FIG. 2

FIG. 3

# FIG. 4

```
              ( START )
                  │
    ┌─────────────────────────────┐
    │        INPUT VIDEO          │~ S1010
    └─────────────────────────────┘
                  │
    ┌─────────────────────────────┐
    │  DISPLAY START FRAME AND    │
    │  RECEIVE SETTINGS OF TWO    │~ S1020
    │     REFERENCE POSITIONS     │
    └─────────────────────────────┘
                  │
                  ▼
    ┌─────────────────────────────┐
    │  SELECT SINGLE FRAME FROM   │~ S1030
    │     START FRAME IN ORDER    │
    └─────────────────────────────┘
                  │
    ┌─────────────────────────────┐
    │    GENERATE INITIAL SAMPLE  │~ S1040
    │   FROM JOINT BASE LINK MODEL│
    └─────────────────────────────┘
                  │
    ┌─────────────────────────────┐
    │ MAP PARTICLE ON HYPERPLANE  │
    │   CALCULATED FROM TWO       │~ S1050
    │  REFERENCE POSITIONS IN     │
    │       REVERSE ORDER         │
    └─────────────────────────────┘
                  │
    ┌─────────────────────────────┐
    │   CALCULATE LIKELIHOOD OF   │
    │   EACH PART REGION FOR      │~ S1060
    │        EACH PARTICLE        │
    └─────────────────────────────┘
                  │
              S1070
          ╱ DOES CANDIDATE ╲     NO
         ⟨  ORIENTATION SATISFY ⟩──────┐      S1080
          ╲ END CONDITION? ╱           │
                  │                     ▼
                YES         ┌────────────────────────────┐
                            │  SET PARTICLE ON HYPERPLANE│
    ┌─────────────────────┐ │  AGAIN BASED ON CANDIDATE  │
    │ OUTPUT ORIENTATION  │ │       ORIENTATION          │
    │ OF WHICH ENTIRE     │~│ S1090                       │
    │ LIKELIHOOD IS HIGHEST│ └────────────────────────────┘
    │    AS SOLUTION      │
    └─────────────────────┘
                  │
              S1100
          ╱ DOES NEXT ╲
   YES  ⟨  FRAME EXIST? ⟩
          ╲           ╱
                  │
                 NO
                  │
              ( END )
```

20

FIG. 5

EP 3 179 446 A1

# FIG. 6

FIG. 7

FIG. 8

330

323

## FIG. 9

# FIG. 10

FIG. 11

**INTERNATIONAL SEARCH REPORT**

| International application No. |
| --- |
| PCT/JP2015/003803 |

A. CLASSIFICATION OF SUBJECT MATTER
*G06T7/60*(2006.01)i

According to International Patent Classification (IPC) or to both national classification and IPC

B. FIELDS SEARCHED

Minimum documentation searched (classification system followed by classification symbols)
G06T7/60

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2012-120647 A  (Alpha Co.), 28 June 2012 (28.06.2012), paragraphs [0180] to [0243]; fig. 34 (Family: none) | 1-14 |
| Y | WO 2007/010893 A1  (NEC Corp.), 25 January 2007 (25.01.2007), paragraphs [0011], [0021] & US 2009/0080780 A1 paragraphs [0011], [0021] | 1-14 |
| Y | JP 2005-349176 A  (Rise Corp., Tohoku University, Tetsuaki MATSUDA), 22 December 2005 (22.12.2005), paragraphs [0029] to [0030] (Family: none) | 2,9 |

[X] Further documents are listed in the continuation of Box C.   [ ] See patent family annex.

\* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 15 October 2015 (15.10.15) | 27 October 2015 (27.10.15) |

| Name and mailing address of the ISA/ Japan Patent Office 3-4-3,Kasumigaseki,Chiyoda-ku, Tokyo 100-8915,Japan | Authorized officer<br><br>Telephone No. |

Form PCT/ISA/210 (second sheet) (July 2009)

## INTERNATIONAL SEARCH REPORT

International application No.

PCT/JP2015/003803

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2012-190159 A (Canon Inc.), 04 October 2012 (04.10.2012), paragraph [0016] (Family: none) | 5,12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KIYOSHI HASHIMOTO et al.** Robust Human Tracking using Statistical Human Shape Model of Appearance Variation. *VIEW2011,* 2011, 60-67

- **J. DEUTSCHER et al.** articulated body motion capture by annealed particle filtering. *cvpr,* 2000, vol. 2, 126-133
- **D. BIDERMAN.** 11 minutes of action. *the wall street journal,* 15 January 2010